# EUROPEAN PATENT APPLICATION

(11) **EP 4 608 021 A1**
(43) Date of publication of application: **27.08.2025**
(21) Application number: 23884469.0
(22) Date of filing: 13.09.2023
(51) Int. Cl.: H04W 52/04, H04B 7/04

(54) **ANTENNA TRANSMITTING POWER CONTROL METHOD AND APPARATUS, ELECTRONIC DEVICE, AND STORAGE MEDIUM**

(30) Priority: 02.11.2022 CN 202211364113
(71) Applicant: REALME MOBILE TELECOMMUNICATIONS (SHENZHEN) CO., LTD., Shenzhen, Guangdong 518066 (CN)
(72) Inventor: YANG, Jiangyan, Shenzhen, Guangdong 518066 (CN)
(74) Representative: Novagraaf Technologies
(86) International application number: PCT/CN2023/118509
(87) International publication number: WO 2024/093537

(57) **Abstract**

The present application relates to an antenna transmitting power control method and apparatus, an electronic device and a storage medium. The method comprises: monitoring the working state of each preset network type of a target electronic device; according to the working state of each network type, determining a target power backoff value; and, on the basis of the target power backoff value, performing backoff processing on the transmitting power of a target antenna corresponding to a target network type. The method can satisfy the requirement on the SAR value of electronic devices and further improve the transmitting performance.

## Description

This application claims priority to Chinese Patent Application No. 202211364113.0, filed to the China national intellectual property administration on November 2, 2022, and entitled "antenna transmission power control method, apparatus, electronic device and storage medium", which is herein incorporated by reference in its entirety.

### TECHNICAL FIELD

The present disclosure relates to the field of mobile communication technologies, and in particular to an antenna transmission power control method, an apparatus, an electronic device and a storage medium.

### BACKGROUND

With an increase in the number of antennas installed in electronic devices, electromagnetic radiation generated by the antennas has become increasingly difficult to neglect. An electromagnetic wave absorption ratio or a specific absorption rate (SAR) is defined as electromagnetic power absorbed or consumed by a human tissue per unit mass, with a unit of W/kg. The SAR is configured to measure an impact of the electromagnetic radiation generated by the antennas on a human body.

Since the higher the SAR value, the more electromagnetic radiation energy the user may absorb, in order to meet industry requirements for the electromagnetic radiation of electronic devices, the electronic devices need to reduce an entire-device SAR value. In the related art, electronic devices may usually reduce a transmission power of each antenna to achieve a purpose of reducing its SAR value.

However, in a case where an electronic device enables multiple types of networks (such as cellular networks, WIFI networks, Bluetooth networks, etc.), the above-mentioned method may often lead to poor transmission performance of the electronic device, and may affect a communication effect.

### SUMMARY

An antenna transmission power control method, an apparatus, an electronic device and a storage medium may be provided in some embodiments of the present disclosure. In a case where the electronic device enables a plurality types of networks, SAR value requirements of electronic devices may be met, and transmission performance of the electronic device may be increased.

According to a first aspect of the present disclosure, an antenna transmission power control method may be provided. The method may include: monitoring operating states of various preset network types of a target electronic device, wherein the operating states include a transmission state and/or an idle state; determining a target power backoff value according to the operating states of the various network types; and performing, based on the target power backoff value, a power backoff process on a transmission power of a target antenna matching with a target network type, wherein the target network type is a network type whose operating state is the transmission state among the various network types.

According to a second aspect of the present disclosure, an antenna transmission power control apparatus may be provided. The apparatus may include: a monitoring module, a determining module, and a processing module. The monitoring module may be configured to monitor operating states of the various preset network types of the target electronic device, wherein the operating states includes the transmission state and/or the idle state. The determining module may be configured to determine the target power backoff value according to the operating states of the various network types. The processing module may be configured to perform, based on the target power backoff value, the power backoff process on the transmission power of the target antenna matching with the target network type. The target network type may be the network type whose operating state is the transmission state among the various network types.

According to a third aspect of the present disclosure, an electronic device is provided. The electronic device may include a memory and a processor. The memory may store a computer program. This computer program, while being executed by the processor, may be configured to achieve the antenna transmission power control method according to the above-mentioned first aspect.

According to a fourth aspect of the present disclosure, a computer-readable storage medium is provided. The computer-readable storage medium may store the computer program. This computer program, while being executed by the processor, may be configured to achieve the antenna transmission power control method according to the above-mentioned first aspect.

According to a fifth aspect of the present disclosure, a computer program product may be provided. The computer program product may include a computer program. The computer program, while being executed by the processor, may be configured to achieve the antenna transmission power control method according to the above-mentioned first aspect.

The beneficial effects brought by the technical solutions provided in some embodiments of the present disclosure may at least include the following.

The operating states of the various preset network types of the target electronic device may be monitored. The operating states may include the transmission state and/or the idle state. Then, the target power backoff value may be determined according to the operating states of the various network types. The power backoff process may be further performed, based on the target power backoff value, on the transmission power of the target antenna matching with the target network type. The target network type may be the network type among the various network types whose operating state is the transmission state. The requirement for the electromagnetic radiation of the electronic device is that the entire-device SAR value of the electronic device should not be greater than a set threshold value. In the case where the electronic device enables multiple types of networks, in the traditional technology, the electronic device needs to perform the power backoff processes on the transmission power of each antenna (that is, the antennas matching with the network types in the transmission state and the antennas matching with the network types in the idle state) of the electronic device. In embodiments of the present disclosure, the power backoff process may be performed on the transmission power of the target antenna matching with the target network type in the transmission state. In this way, the power backoff process may be performed in a more targeted manner. The SAR requirements may be met, and the entire-device over the air (OTA) performance in some scenarios may be ensured. The OTA may be a test to verify the transmission power and reception performance of the mobile communication air interface.

### BRIEF DESCRIPTION OF THE DRAWINGS

In order to more clearly illustrate technical solutions of the present disclosure or the related art, the drawings required in the description of the embodiments or the related art will be briefly introduced below. Obviously, the drawings in the following description are only some embodiments of the present disclosure. For those of ordinary skills in the art, other drawings may be obtained based on these drawings without creative efforts.
Fig. 1 is a schematic principle diagram of a capacitive proximity sensor according to some embodiments of the present disclosure.
Fig. 2 is an internal structural diagram of an electronic device according to some embodiments of the present disclosure.
Fig. 3 is a flowchart of an antenna transmission power control method according to some embodiments of the present disclosure.
Fig. 4 is a flowchart of an operation at block 302 according to some embodiments of the present disclosure.
Fig. 5 is a flowchart of an operation at block 302 according to some other embodiments of the present disclosure.
Fig. 6 is a flowchart of an operation at block 501 according to some embodiments of the present disclosure.
Fig. 7 is a schematic diagram of a matching relationship between scenarios of a target electronic device and power levels in a case where the target electronic device enables two types of networks among the cellular network, the WIFI network and the Bluetooth network according to some embodiments of the present disclosure.
Fig. 8 is a schematic diagram of a matching relationship between scenarios of a target electronic device and power levels in a case where the target electronic device enables two types of networks among the cellular network, the WIFI network and the Bluetooth network according to some other embodiments of the present disclosure.
Fig. 9 is a structural block diagram of an antenna transmission power control apparatus according to some embodiments of the present disclosure.

### DETAILED DESCRIPTION

In order to make purposes, technical solutions and advantages of the present disclosure more clearly understood, the present disclosure will be described in further detail below with reference to the accompanying drawings and embodiments. The specific embodiments described herein are intended for explaining the present disclosure only, and are not intended to limit the present disclosure.

The terminology used in the Detailed Description of the present disclosure is merely used for a purpose of explaining specific embodiments of the present disclosure, and is not intended to limit the present disclosure. The terms "first", "second", "third" and "fourth" or the like in the specification, the claim set and the figures in the present disclosure are used for distinguishing between different objects, and are not used for describing a particular sequential order. In addition, the terms 'include', 'comprise' and any variations thereof are intended to cover non-exclusive inclusion. The expression form "A/B" may include two scenarios: "A and B"; and, "A or B". Unless otherwise specified, the expression form "A/B" may generally refer to "A or B". The term "connection" in the present disclosure may include direct connection, indirect connection, electrical connection, etc. The embodiments, implementations, and relevant technical features of the present disclosure may be combined with each other without conflict.

Electromagnetic radiation is a phenomenon where energy is emitted into space in the form of electromagnetic waves. The electromagnetic radiation has been listed by the world health organization as the fourth major environmental pollution source after water sources, atmospheres, and noises. The electromagnetic radiation has become an invisible "killer" that endangers human health. Relevant researches have shown that, the electromagnetic radiation exceeding 2 milligauss may cause diseases in humans. The first to be affected are the human skin and mucous membrane tissues, with symptoms such as swollen eyelids, bloodshot eyes, nasal congestion and runny nose, and throat discomfort. There may be repeated urticaria, eczema, itching, or the like on the whole-body skin. While affecting the human immune function, patients may also develop vitiligo, psoriasis, allergic purpura, or the like. Long-term and excessive electromagnetic radiation may also cause damage to the human reproductive, nervous, and immune systems, and has become a major inducement for skin diseases, cardiovascular diseases, diabetes, and cancer mutations. During our daily lives, household appliances, office equipment, mobile phones, and computers have become main sources of electromagnetic radiation.

What is used to measure a magnitude of electromagnetic radiation? The answer is a SAR value. The full English name of the SAR is specific absorption rate. In Chinese, the SAR is generally called the electromagnetic wave absorption ratio or the specific absorption rate. The SAR may characterize the electromagnetic wave energy absorption ratio of electronic devices. The SAR is defined as an electromagnetic power absorbed or consumed by the human tissue per unit mass, with the unit of W/kg.

In view of the above-mentioned impacts of the electromagnetic radiation on the human health, government departments and telecommunications regulatory agencies in various countries have promulgated corresponding regulations regarding the electromagnetic radiation, such as the Chinese national standard YD-T1644.1-2007 and the European standard EN62209-1. The differences between the US standard and the European standard are as follows: calculation methods of the SAR value are different, the US standard may calculate a peak value per 1g, while the European standard may calculate an average value per 10g. Both the US standard and the European standard have requirements for body testing. In addition, the federal communications commission (FCC) may regularly issue explanatory documents to provide guidance on specific testing of individual products. Currently, the Chinese national standard only has testing requirements for the human head, and the European Union further has a requirement of 4.0W/kg for a body testing.

As illustrated in Table 1, Table 1 illustrates the requirements for SAR values in various regions.

**Table 1**

| region | standard | SAR limit value |
|---|---|---|
| international commission on non-ionizing radiation protection (ICNIRP) | ICNIRP Guidelines | 2.0W/kg |
| European Union | EN50360&EN50361 | 2.0W/kg |
| United States FCC | FCC OET Bulletin 65 Supplement C | 1.6W/kg |
| Singapore | HAS/ICNIRP Guidelines | 2.0W/kg |

The problem existing in the related art is that: when the electronic device enables multiple types of networks (such as cellular networks, WIFI networks, Bluetooth networks, or the like.), and multiple antennas of the electronic device operate simultaneously, whether the antennas that are operating simultaneously are in a transmission state or an idle state at this time, the electronic device may reduce a transmission power of each antenna, so as to achieve the purpose of reducing its SAR value. In this way, a relatively great power loss of the electronic device in these scenarios may be caused, which may affect the user's experience.

In view of this, the embodiments of the present disclosure provide an antenna transmission power control method, the operating states of the various network types of the target electronic device may be monitored, the operating states may include the transmission state and/or the idle state. Then, a target power backoff value may be determined according to the operating states of the various network types. a power backoff process may be further performed on the transmission power of a target antenna matching with a target network type based on the target power backoff value. The target network type may be a network type among the various network types whose operating state is the transmission state. A requirement for the electromagnetic radiation of the electronic device is that, an entire-device SAR value of the electronic device should not be greater than a set threshold value. In a case where the electronic device enables multiple types of networks, in the traditional technology, the electronic device needs to perform the power backoff process on the transmission power of each antenna (that is, the antennas matching with the network types in the transmission state and the antennas matching with the network types in the idle state) of the electronic device. In this way, in comparation of the traditional technology, the power backoff process may be performed in a more targeted manner. SAR requirements may be met, and the entire-device over the air (OTA) performance in some scenarios may be ensured. The OTA may be a test to verify the transmission power and reception performance of a mobile communication air interface. As an example, in some embodiments, only the transmission power of the target antenna matching with the target network type in the transmission state may be subject to the power backoff process, while the transmission power of the antenna matching with the network type in the idle state may not subject to the power backoff process. In this way, in some embodiments of the present disclosure, a power value that the transmission power of the target antenna needs to be backed off may become less. Compared with the related art, the transmission power of the target antenna may be increased. In other words, a transmission performance of the electronic device may be increased.

In some embodiments, performing, only based on the target power backoff value, the power backoff process on the transmission power of the target antenna matching with the target network type.

In some embodiments, a backoff strength or backoff degree of performing the power backoff process on the transmission power of the target antenna matching with the target network type in the transmission state may be stronger than that of performing the power backoff process on the transmission power of the antenna matching with the network type in the idle state. For example, a backoff value of the former power backoff process may be greater than that of the latter power backoff process.

The antenna transmission power control method provided in the embodiments of the present disclosure may be applied to the electronic devices. Such an electronic device may include, but be not limited to, various personal computers, laptop computers, smartphones, tablets, internet of things (IoT) devices, or portable wearable devices. The IoT devices may be smart speakers, smart TVs, smart air conditioners, smart vehicle-mounted devices, or the like. The portable wearable devices may be smart watches, smart bracelets, head-mounted devices, or the like.

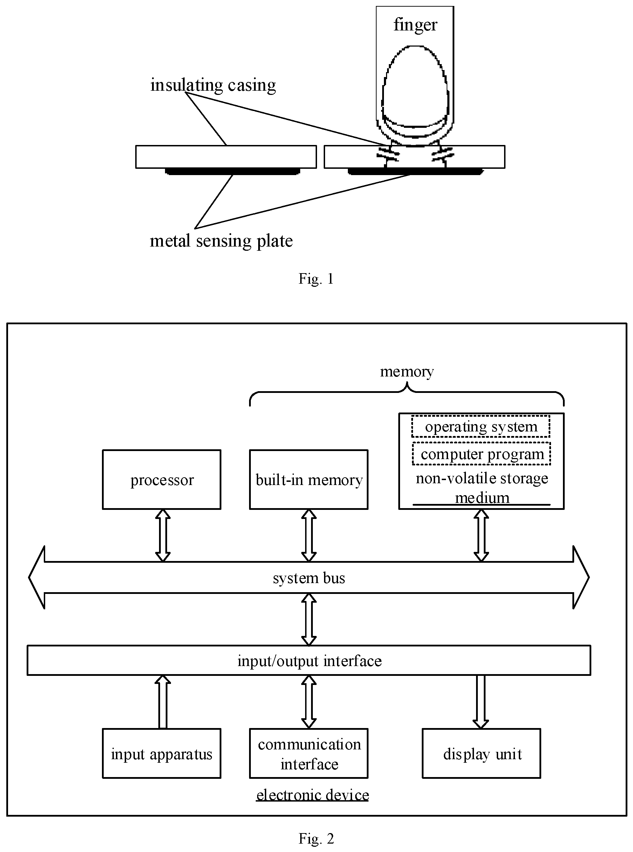

As illustrated in Fig. 2, Fig. 2 is an internal structural diagram of the electronic device. The electronic device may include a processor, a memory, an input/output interface, a communication interface, a display unit, and an input apparatus. The processor, the memory, and the input/output interface may be connected via a system bus. The communication interface, the display unit, and the input apparatus may be connected to the system bus through the input/output interface. The processor of this electronic device may be configured to provide computing and control capabilities. The memory of this electronic device may include a non-volatile storage medium, a built-in memory. An operating system and a computer program may be stored in this non-volatile storage medium. The built-in memory may provide an environment for an operation of the operating system and computer programs in the non-volatile storage medium. The input/output interface of the electronic device may be configured for information exchange of information between the processor and external devices. The communication interface of this electronic device may be configured for wired or wireless communication with external terminals. The wireless communication may be realized through WIFI, mobile cellular networks, near field communication (NFC), or other technologies. This computer program, while being executed by the processor, may be configured to achieve the antenna transmission power control method. The display unit of this electronic device may be configured to form a visually perceivable image. The display unit may be a display screen, a projection apparatus, or a virtual reality imaging apparatus. The display screen may be a liquid crystal display screen or an electronic ink display screen. The input apparatus of this electronic device may be a touch layer covered on the display screen. The input apparatus may also be a button, a trackball, or a touchpad arranged on a casing of the electronic device. The input apparatus may also be an external keyboard, a touchpad, or mouse, or the like.

The structure illustrated in Fig. 2 is only a block diagram of a portion of the structure related to the scheme of the present disclosure, and may not constitute a limitation on the electronic device to which the scheme of the present disclosure is applied. A particular electronic device may include more or fewer components than those illustrated, a combination of certain components, or a different arrangement of components.

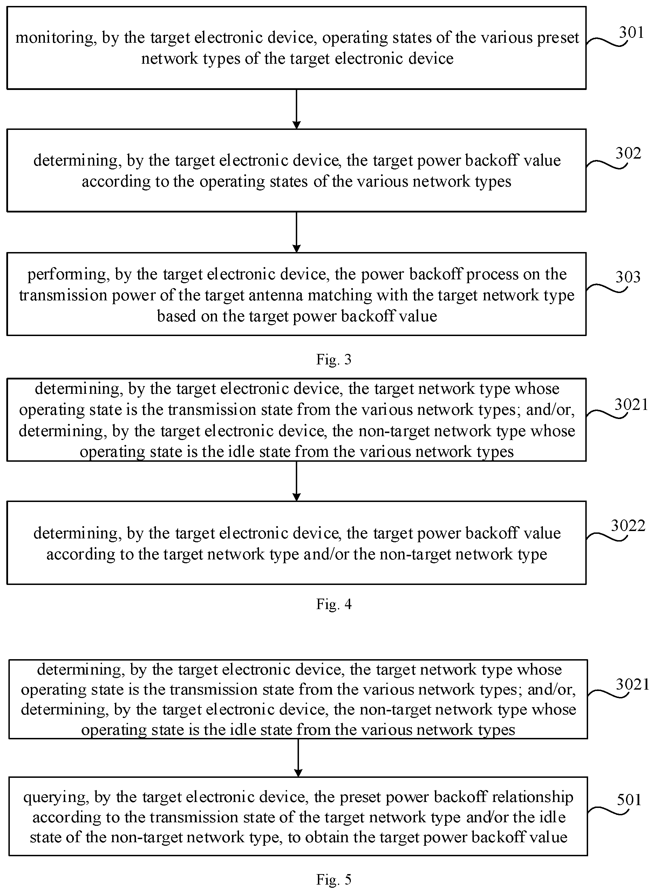

In some embodiments, as illustrated in Fig. 3, the antenna transmission power control method is provided. An example is illustrated in which the method is performed by or applied to the electronic device (hereinafter referred to as a target electronic device) of Fig. 2. The method may include operations at blocks illustrated in Fig. 3.

The operation at block 301: monitoring, by the target electronic device, operating states of various preset network types of the target electronic device.

With the development of wireless communication technologies, at present, almost all electronic devices used by people may support communication through a plurality of network types, such as cellular networks, WIFI (Wireless Fidelity) networks, or Bluetooth networks.

In the embodiments of the present disclosure, the target electronic device may enable a plurality of network types. The target electronic device may monitor the operating states of the various preset network types in the target electronic device in real-time. Herein, the various preset network types may be all the network types enabled by the target electronic device, or may be a portion of all the network types enabled by the target electronic device. In the following, the description will be made by taking the example where the various preset network types are all the network types enabled by the target electronic device.

In the embodiments of the present disclosure, the network types may be one or more of the cellular network, the WIFI network, and the Bluetooth network. The operating states may include the transmission state and/or the idle state.

In some possible embodiments, the target electronic device may monitor whether transmitting ends of the various enabled network types are sending data. The transmitting end may refer to a radio-frequency transmitting circuit matching with this network type, or may refer to the antenna matching with that network type. The target electronic device may be configured with one or more antennas for each network type. In other words, the target electronic device may support multi-antenna simultaneous transmission. If it is detected that the transmitting end of a certain network type is not sending data, this network type may be in the idle state; otherwise, this network type may be in the transmission state.

In some possible embodiments, an operating state monitoring circuit may be further provided in the target electronic device. The monitoring of the operating states of the various network types may be realized through this operating state monitoring circuit. The target electronic device may obtain the operating states of the network types simply by reading monitoring results of the operating state monitoring circuit. In some possible embodiments, the monitoring of the operating states of the various network types in the target electronic device may also be performed by a modem in the target electronic device. The target electronic device may obtain the operating states of the network types by reading the monitoring results of the modem. Here, no limitation may be imposed on the specific manner for the target electronic device to monitor the operating states of the various network types in the target electronic device.

In the embodiments of the present disclosure, the various network types may be any two networks of the cellular network, the WIFI network, and the Bluetooth network, or may be all three networks of the cellular network, the WIFI network, and the Bluetooth network. Of course, the various network types may also include any other networks that may implement the wireless communication. The network types may change with the development of relevant technologies, and no limitation may be imposed on specific types of the network types.

In some embodiments of the present disclosure, the target electronic device enabling a certain type of network may mean that, a function of the target electronic device to communicate through this type of network is enabled. Taking the target electronic device as a mobile terminal as an example, when the user clicks a button to turn on the WIFI network on the mobile terminal, the mobile terminal may enable the WIFI network. In some embodiments of the present disclosure, there are three situations for the above-mentioned idle state. The first situation is that, the target electronic device has enabled a certain type of network, but this certain type of network is idle. In other words, the target electronic device has not established a communication connection with any other communication device through this type of network. The second situation is that, the target electronic device has established a communication connection with any other communication device through this type of network, but the target electronic device is not sending data at this time. The third situation is that, the target electronic device has enabled this certain type of network, and the target electronic device is receiving data through this type of network.

The operation at block 302: determining, by the target electronic device, the target power backoff value based on the operating states of the various network types.

As an example, a power backoff relationship (such as a power backoff table) may be preset in the target electronic device. The target electronic device may obtain the target power backoff value by looking up the power backoff relationship based on the operating states of the various network types.

The several exemplary manners of looking up the table would be described in detail in the following embodiments, and would not be repeated here.

The operation at block 303: performing, by the target electronic device, the power backoff process on the transmission power of the target antenna matching with the target network type based on the target power backoff value.

The target network type may be the network type among the various network types whose operating state is the transmission state.

In some embodiments, the target electronic device may only perform, based on the target power backoff value, the power backoff process on the transmission power of the target antenna matching with the target network type. In other words, the target electronic device may obtain the target power backoff value. The target electronic device may only reduce the transmission power of the target antenna matching with the target network type. A magnitude of the reduced power value may be the target power backoff value.

In some embodiments, a backoff strength or backoff degree of performing the power backoff process on the transmission power of the target antenna matching with the target network type in the transmission state may be stronger than that of performing the power backoff process on the transmission power of the antenna matching with the network type in the idle state. For example, a backoff value of the former may be greater than that of the latter.

In traditional technologies, while determining a power backoff value of each antenna, the electronic device may not consider the operating state of the network type. Instead, the electronic device may directly obtain the power backoff values of the various antennas. This may lead to reduction of the transmission power of the antenna matching with the network type in the idle state. As a result, the antenna of the network type in the transmission state may need to reduce more power to meet the requirements for the entire-device SAR value of the electronic device, resulting in poor transmission performance of the electronic device.

In some embodiments of the present disclosure, the target power backoff value may be determined in combination with the operating states of the network types. Only the target power backoff value are adopted to perform the power backoff process on the transmission power of the target antenna of the target network type in the transmission state. The transmission power of the antenna matching with the network type in the idle state may not be subject to the power backoff process, or the backoff value thereof is relatively low. As a result, the power value that the transmission power of the target antenna needs to be backed off may become less. Compared with the related art, the transmission power of the target antenna may be increased. In other words, the transmission performance of the target electronic device may be increased.

In some embodiments, the target electronic device may enable the cellular network and the WIFI network. However, the target electronic device may not transmit data through the WIFI network. At this point, when the user performs activities through the cellular network, such as when the user makes a phone call, the transmission performance of the cellular network may be increased. For example, taking a case where the target electronic device enables the cellular network and the WIFI network as an example again, when the target electronic device is transmitting data through the WIFI network at this time, but the cellular network is in a registration state and does not conduct data transmission activities, the transmission performance of the WIFI network may be increased, thereby bringing a better experience to the user.

In the above-mentioned embodiments, the operating states of the various preset network types of the target electronic device may be monitored, the operating states may include the transmission state and/or the idle state. Then, the target power backoff value may be determined according to the operating states of the various network types. The power backoff process may be further performed, based on the target power backoff value, on the transmission power of the target antenna matching with the target network type. The target network type may be the network type among the various network types whose operating state is the transmission state. The requirement for the electromagnetic radiation of the electronic device is that the entire-device SAR value of the electronic device should not be greater than a set threshold value. In the case where the electronic device enables multiple types of networks, in the traditional technologies, the electronic device may need to perform the power backoff processes on the transmission power of each antenna (that is, the antennas matching with the network types in the transmission state and the antennas matching with the network types in the idle state) of the electronic device. In some embodiments of the present disclosure, in comparation with the traditional technologies, only the transmission power of the target antenna matching with the target network type in the transmission state may be subject to the power backoff process, while the transmission power of the antenna matching with the network type in the idle state may not be subject to the power backoff process. In this way, in some embodiments of the present disclosure, the power value that the transmission power of the target antenna needs to be backed off becomes less. Compared with the related art, the transmission power of the target antenna may be increased. In other words, the transmission performance of the electronic device may be increased. For example, assume that the requirement for electromagnetic radiation is that the entire-device SAR value of the electronic device should not be greater than 2.0 W/kg. In the traditional technologies, the electronic device needs to perform the power backoff process on the transmission power of the antenna matching with the network type in the idle state. Assume that the SAR value generated by the transmission power of the antenna matching with the network type in the idle state needs to be 1.0 W/kg. Then, when the electronic device performs the power backoff process on the transmission power of the antenna matching with the network type in the transmission state, the SAR value generated by the transmission power of the antenna matching with the network type in the transmission state must also be 1.0 W/kg, such that the requirement for the electromagnetic radiation that the entire-device SAR value of the electronic device is not greater than 2.0 W/kg may be met. In some embodiments of the present disclosure, since the electronic device does not perform the power backoff process on the transmission power of the antenna matching with the network type in the idle state, the electronic device may only need to perform the power backoff process on the transmission power of the above-mentioned target antenna, and make the SAR value generated by the transmission power of this target antenna be 2.0 W/kg, so as to meet the requirement for the electromagnetic radiation. It may be seen that, compared with the related art, in some embodiments of the present disclosure, while the requirement for the SAR value of the electronic device is met, the transmission power of the target antenna may be increased, thereby increasing the transmission performance of the electronic device.

Currently, technologies such as 5G multi-band, multi-antenna, and multiple-in multiple-out (MIMO) have boomed. Scenarios of multi-antenna simultaneous transmission are becoming more and more common. In traditional technologies, if the entire device is to meet the requirement of the SAR value, there may only be lower antenna radiation performance. In this way, during a multi-antenna simultaneous transmission process, a radiation performance of the entire device may be relatively low. In some embodiments of the present disclosure, the radiation performance of the entire device in part of the scenarios may be increased while the entire target electronic device meets the requirement of the SAR value. This part of the scenarios may refer to the scenarios where the target electronic device enables a plurality of types of networks, and among this plurality of types of networks, there may be at least one network type whose operating state is the idle state. In this way, by not performing the power backoff process on the transmission power of the antenna matching with the network type in the idle state, the power value of the transmission power of the target antenna matching with the network type in the transmission state that is backed off may be reduced. The radiation performance of the target antenna may be increased, thereby increasing a user experience.

On the basis of the embodiment illustrated in Fig. 3, as illustrated in Fig. 4, the present embodiment may relate to the process of how the target electronic device determines, based on the operating states of the various network types, the target power backoff value. As illustrated in Fig. 4, the operation at block 302 may include an operation at block 3021 and an operation at block 3022.

The operation at block 3021: determining, by the target electronic device, the target network type whose operating state is the transmission state from the various network types; and/or, determining, by the target electronic device, the non-target network type whose operating state is the idle state from the various network types.

After the target electronic device monitors the operating states of different network types, the target electronic device may determine the network type whose operating state is the transmission state as the target network type, and determine the network type whose operating state is the idle state as the non-target network type. In other words, the non-target network type is the network type whose operating state is the idle state among the various network types. For example, if the target electronic device enables the cellular network and the WIFI network, and the operating state of the cellular network is the transmission state, while the operating state of the WIFI network is the idle state, then the target network type may be the cellular network, and the non-target network type may be the WIFI network.

The operation at block 3022: determining, by the target electronic device, the target power backoff value according to the target network type and/or the non-target network type.

For example, determining, by the target electronic device, the target power backoff value based on the transmission state of the target network type and/or the idle state of the non-target network type.

As an example, as illustrated in Fig. 5, the operation at block 3022 may include the operation at block 501 as illustrated in Fig. 5.

The operation at block 501: querying, by the target electronic device, the preset power backoff relationship according to the transmission state of the target network type and/or the idle state of the non-target network type, to obtain the target power backoff value.

A plurality of groups of matching relationships may be stored in the power backoff relationship. The matching relationships may include the operating state of the network type and the power backoff value. The operating state of the target network type and/or the operating state of the non-target network type may characterize a current scenario of the target electronic device. The transmission state and the idle state may both belong to the above-mentioned different operating states.

Hereinafter, for the convenience of expression, TX (transmit) may be used to represent the transmission state, and idle may be used to represent the idle state. Taking a case where the electronic device enables two of the cellular network, the WIFI network, and the Bluetooth network as an example, the traditional technologies may set different power levels according to the possible usage scenarios of the electronic device, so as to obtain the power backoff relationship. Each power level in the power backoff relationship may include the power backoff values of the various antennas of the electronic device in this scenario.

As illustrated in Table 2, Table 2 is the power backoff table of the electronic device in the traditional technologies (DSI represents a power level, and the power backoff values of the various antennas of the electronic device in this scenario included in each power level is not illustrated in Table 2):

**Table 2**

| scenario | DSI |
|---|---|
| full power | 0 |
| single cellular Head SAR | 1 |
| single cellular Body SAR | 2 |
| cellular + WIFI Head SAR | 3 |
| cellular + WIFI Body SAR | 4 |
| cellular + BT Head SAR | 5 |
| cellular + BT Body SAR | 6 |
| BT + WIFI Head SAR | 7 |
| BT + WIFI Body SAR | 8 |
| WIFI Head SAR | 9 |
| WIFI Body SAR | 10 |

The Head SAR may refer to a case where the electronic device is close to a position of the user's head, the Body SAR may refer to a case where the electronic device is close to a position of the user's body, and the DSI may represent the above-mentioned power level.

Taking the scenario of cellular + WIFI head SAR as an example, according to the different operating states of the cellular network and the WIFI network, there are four combinations for cellular + WIFI: cellular TX + WIFI TX, cellular TX + WIFI idle, cellular idle + WIFI TX, and cellular idle + WIFI idle. For the combinations of cellular TX + WIFI idle, cellular idle + WIFI TX, and cellular idle + WIFI idle, the related art may not distinguish the operating states of the various network types. Instead, in the related art, the transmission power of both the antennas of the cellular network and the WIFI network may be directly reduced, thereby resulting in a relatively low transmission performance of the entire electronic device.

In the following description, the process of how the target electronic device queries a preset power backoff table according to the operating state of the target network type to obtain the target power backoff value will be described.

In the present implementation, the target electronic device may still use the power backoff table in the above-mentioned Table 2. When the target electronic device queries the preset power backoff table, the target electronic device may use the operating state of the target network type as an index to query the power backoff table, so as to obtain the matched power level, and thus obtain the target power backoff value matching with this power level.

For example, for a case where the "cellular TX + WIFI idle" enabled by the target electronic device, according to the traditional technologies and in combination with Table 2, the power level matching with the scenario of "cellular + WIFI" may be DSI3/4. In the present embodiment, the power backoff table is only queried according to the "cellular TX". In combination with Table 2, the power level matching with the single cellular may be DSI1/2.

In the following description, the process of how the target electronic device queries the preset power backoff table according to both the operating state of the target network type and the operating state of the non-target network type so as to obtain the target power backoff value will be described.

In this kind of implementation mode, the power backoff table that is pre-configured in the target electronic device may be obtained by modifying Table 2 in the traditional technologies. The specific modification approach may be: modifying the combinations containing the preset network type in the various scenarios to other scenarios. The preset network type may refer to the network type in the idle state. The other scenario may refer to the state where the network type in the idle state is a non-enabled network type. In other words, in these other scenarios, the target electronic device may not enable the network type in the idle state.

Taking a case where the target electronic device enables two networks of the cellular network, the WIFI network and the Bluetooth network as an example. As illustrated in Table 3 and Table 4, the power backoff table that is pre-configured in the target electronic device in the present embodiment may be as illustrated in the following Table 3 and Table 4.

**Table 3**

| scenario | DSI | B1 |
|---|---|---|
| 1)full power | 0 | 23.5dBm |
| 2)cellular idle + WIFI/BT idle | | |
| Head SAR | 1 | 21dBm |
| single cellular | | |
| cellular TX + WIFI/BT idle | | |
| Body SAR | 2 | 22dBm |
| single cellular | | |
| cellular TX + WIFI/BT idle | | |
| Head SAR | 3 | 19dBm |
| Cellular TX + WIFI TX | | |
| Body SAR | 4 | 20dBm |
| Cellular TX + WIFI TX | | |
| Head SAR | 5 | 20dBm |
| Cellular TX + BT TX | | |
| Body SAR | 6 | 21dBm |
| Cellular TX + BT TX | | |

Here, B1 may represent a frequency band of the cellular network in the matched scenario. The meanings of other English abbreviations have been explained above and will not be repeated here.

**Table 4**

| scenario | DSI | WIFI frequency band |
|---|---|---|
| 1)full power | 0 | 18dBm |
| 2)BT idle + WIFI idle | | |
| Head SAR | 3 | 16dBm |
| Cellular TX + WIFI TX | | |
| Body SAR | 4 | 17dBm |
| Cellular TX + WIFI TX | | |
| Head SAR | 7 | 12dBm |
| BT TX + WIFI TX | | |
| Body SAR | 8 | 13dBm |
| BT TX + WIFI TX | | |
| Head SAR | 9 | 14dBm |
| single WIFI | | |
| cellular/BT idle + WIFI TX | | |
| Body SAR | 10 | 15dBm |
| 1)single WIFI | | |
| 2)cellular/BT idle + WIFI TX | | |

In this way, when the target electronic device queries the power backoff table, the target electronic device may directly query the table with the operating state of the target network type and the operating state of the non-target network type as the scenario. For example, if the operating state of the target network type and the operating state of the non-target network type are cellular TX + WIFI idle, according to the traditional technologies and in combination with Table 2, the power level matching with cellular + WIFI may be DSI3/4. In the present embodiment, by querying the Table 3 and the Table 4 according to cellular TX + WIFI idle, the power level obtained for the single cellular is DSI1/2, thus the matched target power backoff value may be obtained.

Of course, in some other embodiments, the target electronic device may also query the preset power backoff table only according to the operating state of the non-target network type to obtain the target power backoff value, which is not limited herein.

To more clearly illustrate the beneficial effects of the embodiments of the present disclosure, please refer to Table 5. Table 5 may illustrate a transmission power gain of the target electronic device when the implementation mode of the embodiments of the present disclosure is adopted compared with the solution of the traditional technologies:

**Table 5**

| scenario | original DSI | current DSI | gain |
|---|---|---|---|
| cellular idle + WIFI/BT idle | 3/4 | 0 | 4.5dBm/3.5dBm |
| Head SAR | 3/5 | 1 | 2dBm/1dBm |
| cellular TX + WIFI/BT idle | | | |
| Body SAR | 2/3 | 2 | 2dBm/1dBm |
| cellular TX + WIFI/BT idle | | | |
| BT idle + WIFI idle | 7/8 | 0 | 6dBm/5dBm |
| Head SAR | 7 | 9 | 2dBm |
| cellular/BT idle + WIFI TX | | | |
| Body SAR | 8 | 10 | 2dBm |
| cellular/BT idle + WIFI TX | | | |

Here, the original DSI may be the power level obtained by the target electronic device through looking up the table in this scenario when the traditional technologies are adopted to reduce the SAR value. The current DSI may be the power level obtained by the target electronic device through looking up the table in this scenario when the implementation mode of the embodiments of the present disclosure are adopted to reduce the SAR value.

It may be seen that, after the operating state recognition process of the network types is added, when the target electronic device is in the multi-antenna connection state: only when all the network types are in the TX state, the transmission power of all antennas may be reduced to meet the SAR value requirement. When one of the network types is in the idle state, unlike in the traditional technologies where the transmission power of each antenna is reduced, only the transmission power of the antennas of the network types in the transmission state may instead be reduced. In this way, the transmission power of the target electronic device in this scenario may be increased, and the SAR value requirement may be met, thereby increasing the entire-device transmission performance and enhancing the user experience.

The above-mentioned embodiments may all be exemplified by the target electronic device enabling two networks of the cellular network, the WIFI network, and the Bluetooth network. When the target electronic device enables the cellular network, the WIFI network, and the Bluetooth network simultaneously, the embodiments of the present disclosure may also increase the transmission power of the target electronic device in some scenarios. As illustrated in Table 6 and Table 7: Table 6 may illustrate the power backoff table when the target electronic device enables the cellular network, the WIFI network, and the Bluetooth network simultaneously; and Table 7 may illustrate specific benefits when the target electronic device enables the cellular network, the WIFI network, and the Bluetooth network simultaneously.

**Table 6**

| Scenario | DSI | B1 |
|---|---|---|
| 1) full power | 0 | 23.5dBm |
| 2) cellular idle + WIFI idle + BT idle | | |
| Head SAR | 1 | 21dBm |
| 1) single cellular | | |
| 2) cellular TX + WIFI/BT idle | | |
| 3) cellular TX + WIFI idle + BT idle | | |
| Body SAR | 2 | 22dBm |
| 1) single cellular | | |
| 2) cellular TX + WIFI/BT idle | | |
| 3) cellular TX + WIFI idle + BT idle | | |
| Head SAR | 3 | 19dBm |
| 1_) cellular TX + WIFI TX + BT idle | | |
| 2) cellular TX + WIFI idle + BT TX | | |
| Body SAR | 4 | 20dBm |
| 1_) cellular TX + WIFI TX + BT idle | | |
| 2) cellular TX + WIFI idle + BT TX | | |
| Head SAR | 5 | 16dBm |
| cellular TX + WIFI TX + BT TX | | |
| Body SAR | 6 | 15dBm |
| cellular TX + WIFI TX + BT TX | | |

**Table 7**

| scenario | original DSI | current DSI | gain |
|---|---|---|---|
| cellular idle + WIFI/BT idle | 3/4 | 0 | 4.5dBm/3.5dBm |
| Head SAR | 3 | 1 | 2dBm |
| cellular TX + WIFI/BT idle | | | |
| Body SAR | 4 | 2 | 2dBm |
| cellular TX + WIFI/BT idle | | | |
| Head SAR | 5 | 1 | 5dBm |
| cellular TX + WIFI idle + BT idle | | | |
| Body SAR | 6 | 2 | 7dBm |
| cellular TX + WIFI idle + BT idle | | | |
| Head SAR | 5 | 3 | 5dBm |
| cellular TX + WIFI TX + BT idle | | | |
| cellular TX + WIFI idle + BT TX | | | |
| Body SAR | 6 | 4 | 5dBm |
| cellular TX + WIFI TX + BT idle | | | |
| cellular TX + WIFI idle + BT TX | | | |

It may be seen that, after the operating states of the network types are recognized, when the target electronic device is in the multi-antenna connection state, only the transmission power of the antennas of the network types in the transmission state may be reduced. The transmission power of the target electronic device in this scenario may be increased, and the SAR value requirements may be met, thereby increasing the entire-device transmission performance and enhancing the user experience.

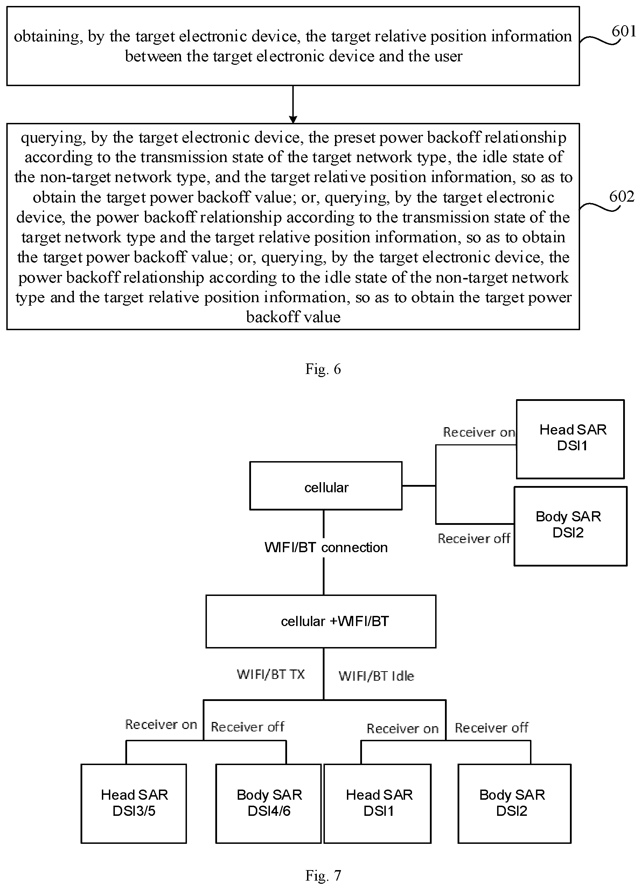

On the basis of the embodiment illustrated in the above-mentioned Fig. 5, as illustrated in the Fig. 6, the present embodiment may relate to the process of how the target electronic device determines the target power backoff value based on the target network type and/or the non-target network type. As illustrated in Fig. 6, the operation at block 501 may include an operation at block 601 and an operation at block 602.

The operation at block 601: obtaining, by the target electronic device, a target relative position information between the target electronic device and the user.

In the embodiments of the present disclosure, the matching relationship in the power backoff relationship may further include the relative position information between the user and the electronic device. The relative position information may be configured to indicate that, the electronic device is close to the user's head position or close to the user's body position. The relative position information may be the Head SAR or the Body SAR in the above-mentioned tables.

In some possible embodiments, the target electronic device may perform the following operations A1, A2, and A3 to achieve the process of obtaining the target relative position information between the target electronic device and the user.

The operation A1: detecting, by the target electronic device, whether an earpiece (also referred to a receiver) of the target electronic device is in an enabled state.

The operation A2: in a case where the earpiece of the target electronic device is in the enabled state, determining, by the target electronic device, that the target relative position information indicates that, the target electronic device is close to the user's head position.

The operation A3: in a case where the earpiece of the target electronic device is in a disabled state, determining, by the target electronic device, that the target relative position information indicates that, the target electronic device is close to the user's body position.

In some possible embodiments, a capacitive proximity sensor may further be provided in the target electronic device. The target relative position information between the target electronic device and the user may be obtained through the capacitive proximity sensor.

The operation at block 602: querying, by the target electronic device, a preset power backoff relationship according to the transmission state of the target network type, the idle state of the non-target network type, and the target relative position information, so as to obtain the target power backoff value; or, querying, by the target electronic device, the power backoff relationship according to the transmission state of the target network type and the target relative position information, so as to obtain the target power backoff value; or, querying, by the target electronic device, the power backoff relationship according to the idle state of the non-target network type and the target relative position information, so as to obtain the target power backoff value.

After the target electronic device has obtained the target relative position information, there are three possible implementations 1), 2) and 3).

1) In some embodiments, the transmission state of the target network type, the idle state of the non-target network type, and the target relative position information may be used as a scenario to index the preset power backoff relationship, so as to obtain the target power backoff value.

2) In some embodiments, the transmission state of the target network type and the target relative position information may also be used as a scenario to index the preset power backoff relationship, so as to obtain the target power backoff value.

3) In some embodiments, the idle state of the non-target network type and the target relative position information may also be used as a scenario to index the preset power backoff relationship, so as to obtain the target power backoff value.

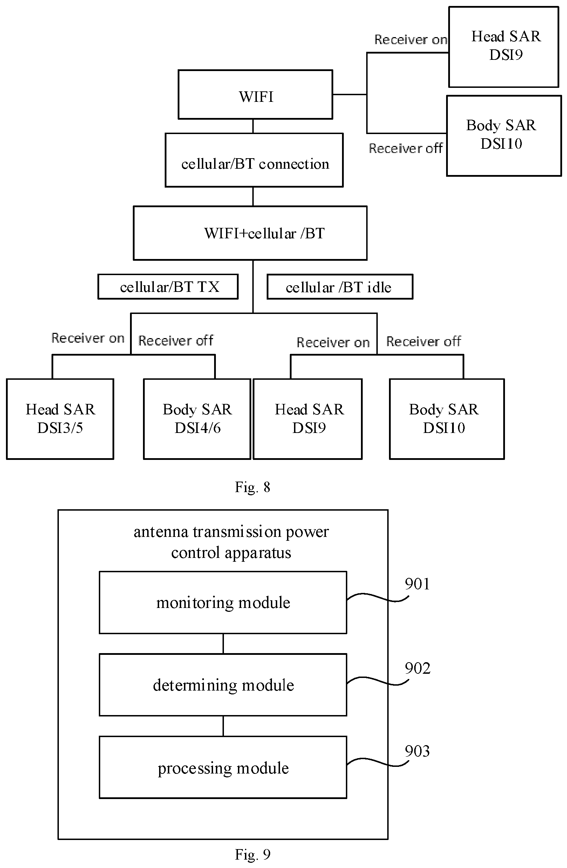

As illustrated in Fig. 7 and Fig. 8, the manner of selecting the power levels in the embodiments of the present disclosure are more clearly illustrated. Fig. 7 is a schematic diagrams of power levels matching with different scenarios when the target electronic device enables two networks of the cellular network, the WIFI network, and the Bluetooth network. Fig. 8 is also a schematic diagrams of power levels matching with different scenarios when the target electronic device enables two networks of the cellular network, the WIFI network, and the Bluetooth network.

As may be illustrated in Fig. 7, in the scenario of the single cellular (cellular TX), Receiver on (i.e., the earpiece is turned on) indicates that, the target electronic device is close to the position of the user's head (i.e., the Head SAR). The power level obtained by the target electronic device through looking up the table is DSI1. In the scenario where both the cellular network and the WIFI network are enabled, in the scenario of cellular TX + WIFI/BT idle, Receiver on (i.e., the earpiece is turned on, also known as the Head SAR), the power level obtained by the target electronic device through looking up the table is DSI1, and so on. The content represented by the schematic diagrams between other scenarios and power levels in Fig. 7 and Fig. 8 may be inferred in the same way, and will not be elaborated here.

In some embodiments of the present disclosure, the operating state recognition of the network type may be added on a Modem side of the target electronic device. In a case where the target electronic device is in the multi-antenna connection state, only when all the network types are in the TX state, the transmit power of each antenna would be reduced to meet the SAR value requirement. When one of the network types is in the Idle state, the transmit power of each antenna may not be reduced in the same way as in the traditional technologies. Instead, only the transmit power of the antenna of the network type in the transmission state may be reduced. In this way, the transmission power of the target electronic device in this scenario may be increased, and the SAR value requirements may be met, thereby increasing the entire-device transmission performance and enhancing the user experience.

Based on the above-mentioned embodiments, in some embodiments, the target electronic device may monitor the operating states of the various network types in the target electronic device through the following operations B1, B2 and B3.

The operation B1: monitoring, by the target electronic device, whether the transmitting ends of the various network types are in a state of sending data packets.

The operation B2: in a case where the transmitting end is in the state of sending data packets, determining, by the target electronic device, that the operating state of this network type is the transmission state.

The operation B3: in a case where the transmitting end is not in the state of sending data packets, determining, by the target electronic device, that the operating state of this network type is the idle state.

In this way, by monitoring whether the transmitting ends of the various network types are in the state of sending data packets, the operating state of the network type may be quickly determined. Thus, the matched power levels may be selected based on different operating states, and the efficiency and accuracy of the antenna transmission power control process may be increased.

In some embodiments, the antenna transmission power control method is provided. The method may include the following operations a to i.

The operation a: monitoring, by the target electronic device, whether the transmitting ends of the various preset network types are in the state of sending data packets.

The network types may be one or more of the cellular network, the WIFI network, or the Bluetooth network.

The operation b: in a case where the transmitting end is in the state of sending data packets, determining, by the target electronic device, that the operating state of this network type is the transmission state.

The operation c: in a case where the transmitting end is not in the state of sending data packets, determining, by the target electronic device, that the operating state of this network type is the idle state.

The operation d: determining, by the target electronic device, the target network type whose operating state is the transmission state from the various network types; and/or, determining, by the target electronic device, the non-target network type whose operating state is the idle state from the various network types;

The operation e: detecting, by the target electronic device, whether the earpiece of the target electronic device is in the enabled state.

The operation f: in a case where the earpiece of the target electronic device is in the enabled state, determining, by the target electronic device, that the target relative position information indicates that, the target electronic device is close to the user's head position.

The operation g: in a case where the earpiece of the target electronic device is in the disabled state, determining, by the target electronic device, that the target relative position information indicates that, the target electronic device is close to the user's body position.

The operation h: querying, by the target electronic device, the preset power backoff relationship according to the transmission state of the target network type, the idle state of the non-target network type, and the target relative position information, so as to obtain the target power backoff value; or, querying, by the target electronic device, the power backoff relationship according to the transmission state of the target network type and the target relative position information, so as to obtain the target power backoff value; or, querying, by the target electronic device, the power backoff relationship according to the idle state of the non-target network type and the target relative position information, so as to obtain the target power backoff value.

A plurality of groups of matching relationships may be stored in the power backoff relationship. The matching relationships may include the operating state of the network type, the relative position information between the user and the electronic device, and the power backoff value. The relative position information may be configured to indicate that, the electronic device is close to the user's head position or close to the user's body position.

The operation i: performing, by the target electronic device, the power backoff process on the transmission power of the target antenna matching with the target network type in the transmission state.

Although in the flowchart involved in the above-mentioned various embodiments, the various operations are illustrated sequentially as indicated by the arrows, these operations may be not necessarily executed sequentially according to the order indicated by these arrows. Unless explicitly stated herein, the sequence in which these operations are performed may not be rigidly restricted, and these operations may be performed in any other sequence. Furthermore, at least a portion of the operations of flowcharts involved in the above-mentioned various embodiments may include a plurality of operations or a plurality of phases. These operations or phases may not be necessarily executed and completed at the same moment, but may be executed at different moments. The order in which these operations or phases are executed is also not necessarily sequential, but these operations or phases may be executed in turn or alternately with other operations or at least a portion of the operations or phases of other operations.

Based on the same inventive concept, the embodiments of the present disclosure may further provide an antenna transmission power control apparatus for implementing the above-mentioned antenna transmission power control method. The solution for solving the problem provided by the present apparatus may be similar to the solution described in the above-mentioned method. Therefore, the specific limitations in one or more embodiments of the antenna transmission power control apparatus provided below may refer to the limitations of the antenna transmission power control method described above, and will not be elaborated herein.

In some embodiments, as illustrated in Fig. 9, the antenna transmission power control apparatus may be provided. The antenna transmission power control apparatus may include a monitoring module 901, a determining module 902, and a processing module 903.

The monitoring module 901 may be configured to monitor operating states of the various preset network types of the target electronic device. The operating states may include the transmission state and/or the idle state.

The determining module 902 may be configured to determining the target power backoff value according to the operating states of the various network types.

The processing module 903 may be configured to perform, based on the target power backoff value, the power backoff process on the transmission power of the target antenna matching with the target network type. The target network type may be the network type whose operating state is the transmission state among the various network types.

In some embodiments, the processing module 903 may be configured to perform, only based on the target power backoff value, the power backoff process on the transmission power of the target antenna matching with the target network type.

In some embodiments, the determining module 902 may include a first determining unit and a second determining unit.

The first determining unit may be configured to: determine the network type whose operating state is the transmission state from the various network types as the target network type; and/or, determine the network type whose operating state is the idle state from the various network types as the non-target network type.

The second determining unit may be configured to determine the target power backoff value according to the target network type and/or the non-target network type.

In some embodiments, the second determining unit is specifically configured to query the preset power backoff relationship (for example, the backoff table) according to the transmission state of the target network type and/or to the idle state of the non-target network type, so as to obtain the target power backoff value. A plurality of groups of matching relationships may be stored in the power backoff. The matching relationships may include the operating state of the network type and the power backoff value.

In some embodiments, the matching relationship may further include the relative position information between the user and the electronic device. The relative position information may be configured to indicate that, the electronic device is close to the user's head position or close to the user's body position. The second determining unit may be specifically configured to: obtain the target relative position information between the target electronic device and the user; query the preset power backoff relationship according to the transmission state of the target network type, the idle state of the non-target network type, and the target relative position information, so as to obtain the target power backoff value; or, query the power backoff relationship according to the transmission state of the target network type and the target relative position information, so as to obtain the target power backoff value; or, query the power backoff relationship according to the idle state of the non-target network type and the target relative position information, so as to obtain the target power backoff value.

In some embodiments, the second determining unit is specifically configured to detect whether the earpiece of the target electronic device is in the enabled state. In a case where the earpiece of the target electronic device is in the enabled state, the second determining unit may determine that the target relative position information indicates that, the target electronic device is close to the user's head position. In a case where the earpiece of the target electronic device is in the disabled state, the second determining unit may determine that the target relative position information indicates that, the target electronic device is close to the user's body position.

In some embodiments, the monitoring module 901 may be configured to: monitor whether the transmitting ends of the various network types are in the state of sending data packets; in a case where the transmitting end is in the state of sending data packets, determine that the operating state of the network type is the transmission state ; in a case where the transmitting end is not in the state of sending data packets, determine that the operating state of the network type is the idle state.

In some embodiments, the network types may be one or more of the cellular network, the WIFI network, and the Bluetooth network.

The various modules in the above-mentioned antenna transmission power control apparatus may be implemented in whole or in part by software, hardware, and combinations thereof. The above-mentioned modules may be embedded in or independent of the processor of the electronic device in the form of hardware, or may be stored in a memory of the electronic device in the form of software, so as to be recalled by the processor to perform the operation corresponding to the above-mentioned various modules.

A computer-readable storage medium is also provided in the present disclosure. One or more non-volatile computer-readable storage medium including a computer executable instruction is provided. The computer executable instruction, when being executed by one or more processors, may be configured to enable the one or more processors to implement the operations of the antenna transmission power control method.

A computer program product including an instruction may be further provided according to some embodiments of the present disclosure. The computer program product, when being run on the computer, may enable the computer to implement the antenna transmission power control method.

User information (including but not limited to the information of the user device, the user's personal information, or the like) and data (including but not limited to the data for analysis, the stored data, the displayed data, or the like) involved in the present disclosure are all the information and data authorized by the user or fully authorized by all involved parties. In addition, collection, usage and processing of the relevant data shall comply with the relevant laws, regulations and standards of the relevant countries and regions.

Those of ordinary skills in the art may appreciate that, all or part of the processes for implementing the method in the above-mentioned embodiments may be done by instructing the relevant hardware through a computer program. The computer program may be stored in a non-volatile computer-readable storage medium. This computer program, when being executed, may include the operations of the embodiments of the above-mentioned various methods. Any reference to a memory, a database or other media used in the various embodiments provided in the present disclosure may include at least one of the non-volatile memory and the volatile memory. The non-volatile memory may include a read-only memory (ROM), a magnetic tape, a floppy disk, a flash memory, an optical memory, a high-density embedded non-volatile memory, a resistive random-access memory (ReRAM), a magneto resistive random-access memory (MRAM), a ferroelectric random-access memory (FRAM), a phase change memory (PCM), a graphene memory, or the like. The volatile memory may include a random-access memory (RAM) or an external cache memory, or the like. For illustration rather than limitation, the RAM may be in various forms, such as a static random-access memory (SRAM) or a dynamic random-access memory (DRAM), or the like. The database involved in the various embodiments provided in the present disclosure may include at least one of a relational database and a non-relational database. The non-relational database may include a blockchain-based distributed database, or the like, and is not limited thereto. The processor involved in the various embodiments provided by the present disclosure may be a general-purpose processor, a central processing unit, a graphics processing unit, a digital signal processor, a programmable logic device, a data processing logic device based on quantum computing, or the like, and is not limited thereto.

Each technical feature in the above-mentioned embodiments may be combined arbitrarily. For a concise description, all possible combinations of various technical features in the above embodiments are not described. Each combination of these technical features which has no contradiction should be regarded within a scope recited by the specification.

The above-mentioned embodiments only express a few implementations of the present disclosure, the description thereof is relatively specific and detailed, but they could not be construed as a limitation on the scope of the patent application. It should be pointed out that, for those of ordinary skills in the art, without departing from the concept of this application, several modifications and improvements could be made, and these all fall within the protection scope of the present disclosure. Therefore, the protection scope of the present disclosure should be subject to the appended claims.

## Claims

1. An antenna transmission power control method, comprising:
monitoring operating states of various preset network types of a target electronic device, wherein the operating states comprise a transmission state and/or an idle state;
determining a target power backoff value according to the operating states of the various network types; and
performing, based on the target power backoff value, a power backoff process on a transmission power of a target antenna matching with a target network type, wherein the target network type is a network type whose operating state is the transmission state among the various network types.

2. The method as claimed in claim 1, wherein
the determining the target power backoff value according to the operating states of the various network types comprises:
determining the target power backoff value according to the target network type and/or a non-target network type, wherein the non-target network type is a network type whose operating state is the idle state among the various network types.

3. The method as claimed in claim 2, wherein
the determining the target power backoff value according to the target network type and/or the non-target network type comprises:
querying a preset power backoff relationship according to the transmission state of the target network type and/or the idle state of the non-target network type, to obtain the target power backoff value;
wherein the power backoff relationship comprises a plurality of groups of matching relationships, the matching relationships comprise an operating state of a network type and a power backoff value.

4. The method as claimed in claim 3, wherein
the matching relationships further comprise relative position information between a user and an electronic device; the relative position information is configured to indicate that, the electronic device is close to the user's head position or close to the user's body position; the querying the preset power backoff relationship according to the transmission state of the target network type and/or the idle state of the non-target network type, to obtain the target power backoff value comprises:
obtaining target relative position information between the target electronic device and the user; and
querying the preset power backoff relationship according to the transmission state of the target network type, the idle state of the non-target network type, and the target relative position information, to obtain the target power backoff value; or, querying the power backoff relationship according to the transmission state of the target network type and the target relative position information, to obtain the target power backoff value; or, querying the power backoff relationship according to the idle state of the non-target network type and the target relative position information, to obtain the target power backoff value.

5. The method as claimed in claim 4, wherein
the obtaining the target relative position information between the target electronic device and the user comprises:
detecting whether an earpiece of the target electronic device is in an enabled state;
in a case where the earpiece of the target electronic device is in the enabled state, determining that the target relative position information indicates that, the target electronic device is close to the user's head position;
in a case where the earpiece of the target electronic device is in a disabled state, determining that the target relative position information indicates that, the target electronic device is close to the user's body position.

6. The method as claimed in claim 4, wherein
the obtaining the target relative position information between the target electronic device and the user comprises:
obtaining the target relative position information between the target electronic device and the user through a capacitive proximity sensor provided in the target electronic device.

7. The method as claimed in any of claims 1-6, wherein
the monitoring the operating states of the various preset network types of the target electronic device comprises:
monitoring whether transmitting ends of the various network types are in a state of sending data packets;
in a case where a transmitting end of a network type is in the state of sending data packets, determining that the operating state of the network type is the transmission state;
in a case where the transmitting end of a network type is not in the state of sending data packets, determining that the operating state of the network type is the idle state.

8. The method as claimed in any of claims 1-6, wherein
the monitoring the operating states of the various preset network types of the target electronic device comprises:
monitoring the operating states of the various network types through an operating state monitoring circuit provided in the target electronic device.

9. The method as claimed in any of claims 1-6, wherein
the network type is one or more of a cellular network, a WIFI network, and a Bluetooth network.

10. The method as claimed in any of claims 1-6, wherein
the performing, based on the target power backoff value, the power backoff process on the transmission power of the target antenna matching with the target network type comprises:
performing, only based on the target power backoff value, the power backoff process on the transmission power of the target antenna matching with the target network type.

11. An antenna transmission power control apparatus, comprising:
a monitoring module, configured to monitor operating states of various preset network types of a target electronic device, wherein the operating states comprise a transmission state and/or an idle state;
a determining module, configured to determine a target power backoff value according to the operating states of the various network types; and
a processing module, configured to perform, based on the target power backoff value, a power backoff process on a transmission power of a target antenna matching with a target network type, wherein the target network type is a network type whose operating state is the transmission state among the various network types.

12. The apparatus as claimed in claim 11, wherein
the determining module comprises a second determining unit;
the second determining unit is configured to determine the target power backoff value according to the target network type and/or a non-target network type; the non-target network type is a network type whose operating state is the idle state among the various network types.

13. The apparatus as claimed in claim 12, wherein
the second determining unit is configured to query a preset power backoff relationship according to the transmission state of the target network type and/or the idle state of the non-target network type, so as to obtain the target power backoff value;
the power backoff relationship comprises a plurality of groups of matching relationships, the matching relationships comprise an operating state of a network type and a power backoff value.

14. The apparatus as claimed in claim 13, wherein
the matching relationships further comprise relative position information between a user and an electronic device; the relative position information is configured to indicate that, the electronic device is close to the user's head position or close to the user's body position;
the second determining unit is configured to:
obtain the target relative position information between the target electronic device and the user;
query the preset power backoff relationship according to the transmission state of the target network type, the idle state of the non-target network type, and the target relative position information, to obtain the target power backoff value; or, query the power backoff relationship according to the transmission state of the target network type and the target relative position information, to obtain the target power backoff value; or, query the power backoff relationship according to the idle state of the non-target network type and the target relative position information, to obtain the target power backoff value.

15. The apparatus as claimed in claim 14, wherein
the second determining unit is configured to:
detect whether an earpiece of the target electronic device is in an enabled state;
in a case where the earpiece of the target electronic device is in the enabled state, determine that the target relative position information indicates that, the target electronic device is close to the user's head position;
in a case where the earpiece of the target electronic device is in a disabled state, determine that the target relative position information indicates that, the target electronic device is close to the user's body position.

16. The apparatus as claimed in any of claims 11-15, wherein
the monitoring module is configured to:
monitor whether the transmitting ends of the various network types are in a state of sending data packets;
in a case where a transmitting end of a network type is in the state of sending data packets, determine that the operating state of the network type is the transmission state;
in a case where the transmitting end of a network type is not in the state of sending data packets, determine that the operating state of the network type is the idle state.

17. The apparatus as claimed in any of claims 11-15, wherein
the network type is one or more of a cellular network, a WIFI network, and a Bluetooth network.

18. An electronic device, comprising a memory and a processor, the memory storing a computer program, wherein
when the processor executes the computer program, the processor is enabled to implement operations of the method as claimed in any of claims 1 to 10.

19. A computer-readable storage medium storing a computer program, wherein
the computer program, when being executed by a processor, is configured to implement operations of the method as claimed in any of claims 1-10.

20. A computer program product, comprising a computer program, wherein
the computer program, when being executed by a processor, is configured to implement operations of the method as claimed in any of claims 1-10.
